# EUROPEAN PATENT APPLICATION

(11) **EP 4 787 209 A2**
(43) Date of publication of application: **05.08.2026**
(21) Application number: 26165117.8
(22) Date of filing: 23.06.2022
(51) Int. Cl.: G06F 21/60

(54) **APPROACHES OF PERFORMING DATA PROCESSING WHILE MAINTAINING SECURITY OF ENCRYPTED DATA**

(30) Priority: 23.06.2021 US 202163214179 P; 15.06.2022 US 202217841566
(62) Divisional of application: 22180855.3
(71) Applicant: Palantir Technologies Inc., Aventura, Florida 33180 (US)
(72) Inventor: WILCZYNSKI, Peter, Aventura, 33180 (US)
(74) Representative: Sayer, Robert David

(57) **Abstract**

Systems and methods are provided for receiving encrypted data from a second computing system and instantiating the computing system to process the encrypted data. The instantiation includes decrypting the encrypted data using a private key, performing an operation on the decrypted data, presenting an output indicating a result of the operation on the decrypted data, and re-encrypting the decrypted data. After the data is re-encrypted, the data is transmitted to the second computing system or a third computing system.

## Description

### FIELD OF THE INVENTION

This application claims priority to United States Provisional Patent Application No. 63/214,179, filed June 23, 2021 and to United States Patent Application No. 17/841,566, filed June 15, 2022.

This disclosure relates to approaches of performing data processing on encrypted data, such as data encrypted using an end-to-end encryption system.

### BACKGROUND

Conventional approaches of maintaining data security includes encrypting data in transit between two entities, so that no third party besides a sender and a receiver can view or access the data. For example, end-to-end encryption such as Pretty Good Privacy (PGP) may enforce data encryption such that data in transit is encrypted throughout the entire transit process, without being decrypted on any machine which the data may pass. Thus, no intermediary (computer or entity) can decrypt the data unless that intermediary has a private key. However, while end-to-end encryption maintains security of data in transit, keeping data encrypted may compromise an extent to which the data may be processed.

### SUMMARY

The invention is defined by the independent claims. The dependent claims concern optional features of some embodiments. Various embodiments of the present disclosure can include computing systems, methods, and computer readable media, including non-transitory computer readable media, configured to perform data processing on encrypted data. The computing systems, methods, and computer readable media, including non-transitory computer readable media, may perform: receiving encrypted data from a second computing system and instantiating the computing system to process the encrypted data. The instantiation comprises decrypting the encrypted data using a private key; execute an operation on the decrypted data; presenting an output indicating a result of the operation on the decrypted data; and re-encrypting the decrypted data. After the re-encryption, the data is transmitting to the second computing system or a third computing system.

In some embodiments, the decrypted data comprises textual data and the operation on the decrypted data comprises: tracking a location of a sender and a receiver of the received encrypted data; setting a geofence corresponding to the sender and receiver; and generating an alert to the sender and the receiver when the sender or the receiver is determined to be within the geofence.

In some embodiments, the decrypted data comprises media, the media including an image, audio, video, or combination thereof; and the operation on the decrypted data comprises downsampling, compressing, or removing a feature of the decrypted data.

In some embodiments, the decrypted data comprises a media, the media including an image, audio, video, or combination thereof; and the operation on the decrypted data comprises augmenting a feature of the decrypted data.

In some embodiments, the received encrypted data is from a single communication channel.

In some embodiments, the instructions further cause the system to perform: receiving an input regarding one or more features of the decrypted data; inferring, using a machine learning model, one or more criteria of operation on the decrypted data based on the input; and applying the inferred criteria to the operation on the decrypted data.

These and other features of the computing system, methods, computer readable media, including non-transitory computer readable media, disclosed herein, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for purposes of illustration and description only and are not intended as a definition of the limits of the invention.

### BRIEF DESCRIPTION OF THE DRAWINGS

Certain features of various embodiments of the present technology are set forth with particularity in the appended claims. A better understanding of the features and advantages of the technology will be obtained by reference to the following detailed description that sets forth illustrative embodiments, in which the principles of the invention are utilized, and the accompanying drawings of which:
**FIGURE 1** illustrates an example computing environment, in accordance with various embodiments of the present technology.
**FIGURES 2A-2B** illustrate exemplary implementations of a computing system decrypting and re-encrypting data, in accordance with various embodiments of the present technology.
**FIGURES 3A-3B** illustrate exemplary implementations of a computing system performing data analysis, entity extraction, flagging, or alerting, and server side inferences using machine learning, in accordance with various embodiments of the present technology.
**FIGURES 4A-4B** illustrate exemplary implementations of a computing system performing alerting upon detecting certain conditions, such as based on location and/or communication characteristics, in accordance with various embodiments of the present technology.
**FIGURE 5** illustrates exemplary implementations of a computing system performing modification of plaintext, such as deletion or redaction based on metadata such as access control policies, such as based on location and/or communication characteristics, in accordance with various embodiments of the present technology.
**FIGURE 6** illustrates exemplary implementations of a computing system performing data transformation on plaintext, such as merges and joins, in accordance with various embodiments of the present technology.
**FIGURE** 7 illustrates exemplary implementations of a computing system performing data operations on media data, in accordance with various embodiments of the present technology.
**FIGURE 8** illustrates an exemplary flowchart, consistent with **FIGURES 1****,** **2A-2B****,** **3A-3B****,** **4A-4B****,** and **5-7****,** in accordance with various embodiments of the present technology.
**FIGURE 9** illustrates a block diagram of an example computer system in which any of the embodiments described herein may be implemented.

### DETAILED DESCRIPTION

As data utilization has skyrocketed, the need to maintain security of data by preventing security breaches, leaks, or other unintended transmission has grown increasingly important. One approach of maintaining such security is encrypting data during transit so that no intermediary machine or entity can access plaintext data or decrypt the encrypted data. In such a manner, only a sender and a receiver, or intended recipient, can access the plaintext data. For example, end-to-end encryption methods such as Pretty Good Privacy (PGP) may include converting plaintext into cipher text before transmitting a message from a sender to a receiver. The receiver may transmit a public key to a sender to encrypt the plaintext and decrypt the encrypted data upon receipt using a private key from the sender.

However, one tradeoff of encrypting data is that processing capabilities and/or execution of logic on encrypted data are more limited compared to those on non-encrypted data or plaintext, thereby limiting features that potentially enhance or augment the data. For example, the data may be unable to be further analyzed, extracted, manipulated, or otherwise processed or operated on to detect information such as locations or capture features.

To address such data processing shortcomings, without compromising security of data, a new approach includes, receiving encrypted data from a second computing system and instantiating a trusted computing system to process the encrypted data, so that only the sender, receiver, and the trusted computing system would have access to the decrypted data. The trusted computing system may be separate from and may have a higher security level compared to the second computing system. The trusted computing system may include, in some examples, a bot or agent to process the encrypted data by decrypting the data, performing an operation on the decrypted data, and re-encrypting the data before transmitting the re-encrypted data to the second computing system or another computing system to continue transit of the re-encrypted data to a receiver. Using such an implementation, data may be augmented without sacrificing security of data, while overcoming constraints of data analysis on encrypted data.

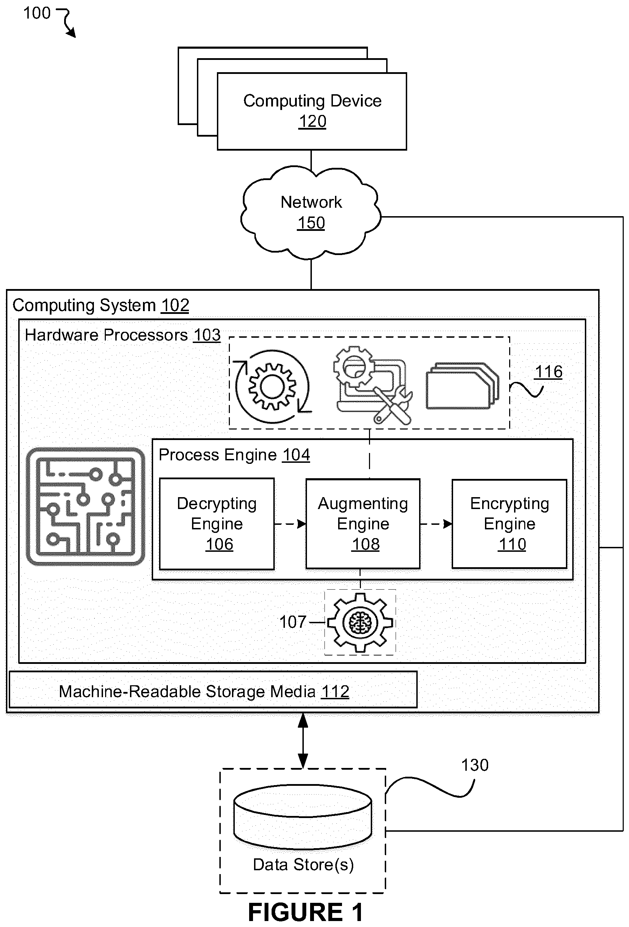

**FIGURE 1** illustrates an example environment 100, in accordance with various embodiments, of a computing system that performs data operations such as analysis, processing, and/or augmentation from an encrypted data input. The example environment 100 can include at least a computing system 102 and at least one computing device 120. The computing system 102 and the computing device 120 can each include one or more processors and memory. The processors can be configured to perform various operations by interpreting machine-readable instructions, for example, from a machine-readable storage media 112. The processors can include one or more hardware processors 103 of the computing system 102 that can be configured to decrypt data, perform operations on the decrypted data, and re-encrypt the decrypted data, while keeping the decrypted data isolated from other entities and computing systems. Additionally, once the decrypted data is processed and re-encrypted, the hardware processors 103 may delete the decrypted data to prevent any potential data security breaches or leaks. The operations may include logic operations on the decrypted data. The logic operations may encompass, as non-limiting examples, alerts, tags, notifications, extractions of entities, transformations, and/or server-side machine learning or artificial intelligence (Al). The specific operations to be performed on the decrypted data may be determined from user feedback or a user indication. Here, a user may refer to a sender or receiver, or other entity authorized to view or access the decrypted data.

As shown in **FIGURE 1****,** the one or more hardware processors can include a process engine 104. The process engine 104 may include a decrypting engine 106, an augmenting engine 108, and an encrypting engine 110. The augmenting engine 108 may include, or utilize, one or more machine learning models 107. The machine learning models 107 may be trained to make inferences in different scenarios such as the ones described in reference to the subsequent **FIGURES.** In other examples, the augmenting engine 108 may be programmed to perform data analysis . The augmenting engine 108 may also be associated with or include a platform 116, which encompasses logic to perform operations such as data analysis, extraction, and/or transformations. The process engine 104 may be executed by the hardware processor(s) 103 of the computing system 102 to perform various operations including those operations described in reference to the decrypting engine 106, the augmenting engine 108, and the encrypting engine 110. In general, the process engine 104 may be implemented, in whole or in part, as software that is capable of running on one or more computing devices or systems. In one example, the process engine 104 may be implemented as or within a software application running on one or more computing devices (e.g., user or client devices) and/or one or more servers (e.g., network servers or cloud servers). In some instances, various aspects of the decrypting engine 106, the augmenting engine 108, and the encrypting engine 110 may be implemented in one or more computing systems and/or devices.

The environment 100 may also include one or more data stores 130 accessible to the computing system 102. The data stores 130 may be accessible to the computing system 102 either directly or over a network 150. In some embodiments, to maintain data security, the data stores may store any or all of the decrypted, encrypted, and/or re-encrypted data accessed and processed by the process engine 104 temporarily, and delete such data following a threshold duration of time.

In general, a user operating a computing device 120 can interact with the computing system 102 over the network 150, for example, through one or more graphical user interfaces and/or application programming interfaces. In some instances, one or more of the decrypting engine 106, the augmenting engine 108, and the encrypting engine 110, may be combined or integrated into a single processor, and some or all functions performed by one or more of the aforementioned engines may not be spatially separated, but instead may be performed by a common processor.

The process engine 104 can be configured to process requests received from the computing device 120. For example, the requests may be generated based on operations performed by a user operating the computing device 120 or from a software application or embedded machine running on the computing device 120. In various examples, such requests may input media data into the computing system 102. Input or feedback may be provided from the computing device 120 in a form of tags which either indicate a relatively higher or lower informational value or measure of information content of a particular byte, feature, portion, and/or frame of the media data. The requests may indicate to perform data operations, analysis or processing.

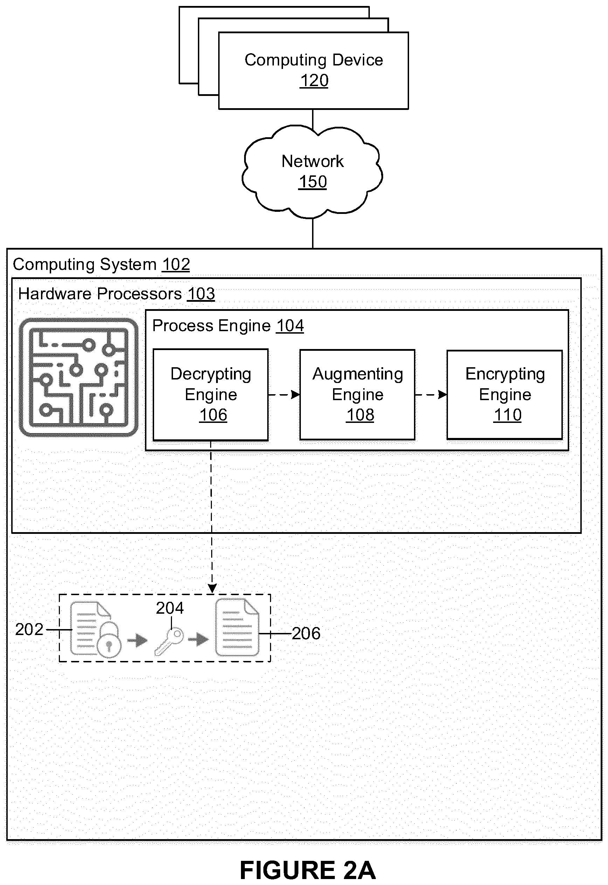

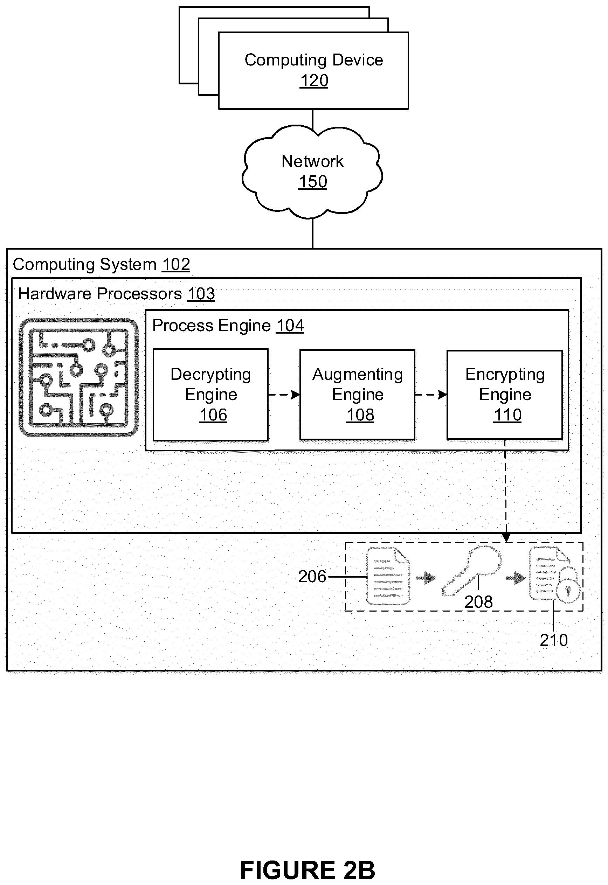

**FIGURE 2A** illustrates a decrypting engine 106. The decrypting engine 106 may decrypt encrypted data 202 into decrypted data 206 received from another computing system. The data may be text or media, such as image, video, audio, or a combination thereof. The data may include a single channel of data from a communication channel. Data from other communication channels may be received and processed separately. The decrypting engine 106 may receive or obtain a private key 204 to decrypt the data. The encrypted data 202 may be decrypted prior to operations on the data by the augmenting engine 108, which will be described in subsequent **FIGURES.** Once the operations on the data are completed, results of the analysis may be presented to a user, for example, on an interface of the computing device 120. The decrypted data 206 may then be re-encrypted into re-encrypted data 210 by the encrypting engine 110 using a key 208, as illustrated in **FIGURE 2B****.** The decrypted data 206 may be deleted to ensure data security and prevent unauthorized access to the decrypted data 206. Therefore, operations on the decrypted data 200, such as data processing, analysis, transformation, and/or manipulation is enabled without compromising security.

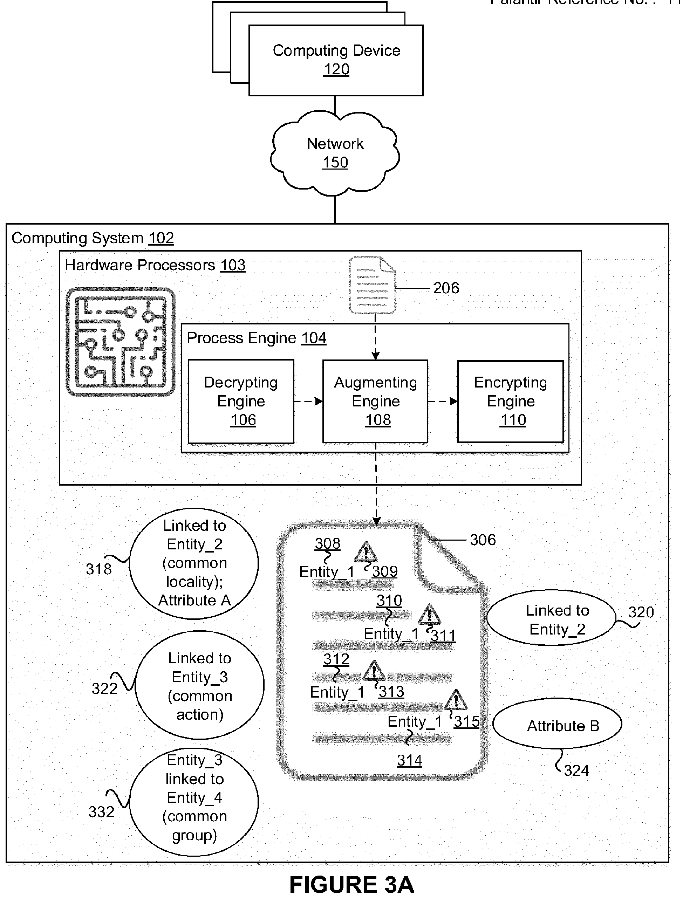

The subsequent **FIGURES 3A-3B****,** **4A-4B****,** and **5-7** illustrate exemplary implementations of the aforementioned engines in order to elucidate features and functions that the engines are configured to perform. Aspects, implementations, and/or principles from different **FIGURES** may be combined as appropriate.

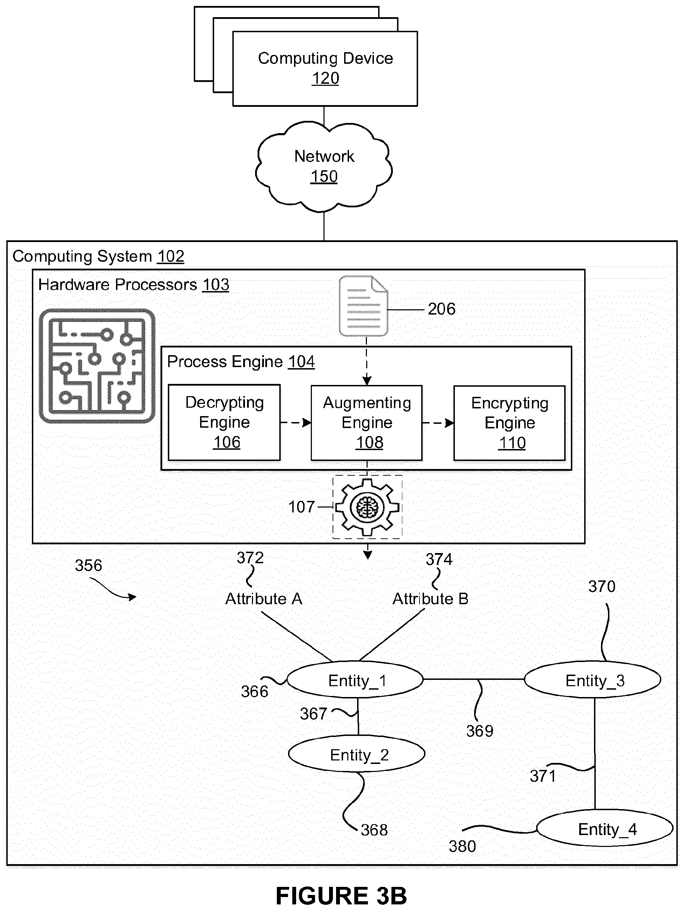

**FIGURES 3A** and **3B** illustrates an exemplary implementation of the computing system 102, in particular, the augmenting engine 108. In some embodiments, the augmenting engine 108 may analyze the decrypted data 206 and perform data mining, such as searching for particular text, terms, or patterns within the decrypted data 206, while highlighting such instances. For example, every time a specific name or any name appears in the decrypted data 206, the augmenting engine 108 may highlight such instances or generate an alert. The augmenting engine 108 may detect a particular alphanumeric combination or syntax. Additionally or alternatively, the augmenting engine 108 may output or extract such instances and indicate contextual information regarding the instances. In one scenario, the augmenting engine 108 may detect instances of a particular identifier, such as "Entity_1." "Entity_1" may refer to a person or a nonhuman entity, that may be represented as an object. The augmenting engine 108 may either flag or highlight such instances. For example, the augmenting engine 108 may detect instances 308, 310, 312, and 314 of "Entity_1" in which "Entity_1" is referred to, within the decrypted data 206. The augmenting engine 108 may add flags 309, 311, 313, and 315 corresponding to the instances 308, 310, 312, and 314, respectively, to generate augmented data 306. In some examples, the augmenting engine 108 may also detect instances of pseudonyms, variations, or synonyms of "Entity_1." The augmenting engine 108 may also output or extract such instances, and indicate contextual information regarding "Entity_1" such as a location within the decrypted data 206, of such instances, other entities near or associated with such instances, and/or extract attributes of "Entity_1." For example, the augmenting engine 108 may output contextual information 318 associated with the instance 308, indicating a link between "Entity_1" and "Entity_2," a nature or type of the link, here, a common physical locality, and/or an attribute A of the "Entity_1." In some examples, an attribute may indicate a characteristic of the "Entity_1," such as a type, classification, or capability. Meanwhile, the augmenting engine 108 may output contextual information 320 associated with the instance 310, indicating a link between the "Entity_1" and "Entity_2." Additionally, the augmenting engine 108 may output contextual information 322 associated with the instance 312, indicating a link between the "Entity_1" and "Entity_3." The link may indicate that the "Entity_1" and "Entity_3" are linked via common actions, in particular, that the two entities were linked in that both performed a previous action or were involved in such performance. The augmenting engine 108 may also output contextual information 332 associated with the instance 312, indicating a link between "Entity_3" and "Entity_4," and a nature of such link, that "Entity_3" and "Entity_4," are linked by a common group, organization, or classification. Lastly, the augmenting engine 108 may output contextual information 324 associated with the instance 314, indicating an attribute B of the "Entity_1."

In some examples, as illustrated in **FIGURE 3B****,** the augmenting engine 108 may output, from extraction and/or analyses illustrated in **FIGURE 3A****,** a representation 356 that indicates any or all of the contextual information related to the "Entity_1." Although **FIGURE 3B** illustrates an object-based representation, other representations such as a tabular representation may also be contemplated. For example, the representation 356 may be an object representation of the "Entity_1," indicating an object 366 representing "Entity_1," an object 368 representing "Entity_2," and an object 370 representing "Entity_3, " and object 380 representing "Entity_4." Additionally, the representation 356 may indicate attribute 372 corresponding to attribute A, and attribute 374 corresponding to attribute B. In some examples, the augmenting engine 108 may determine, predict or infer characteristics of a link 367 between the "Entity_1" and the "Entity_2." Such prediction or inference may employ the machine learning models 107. These characteristics may encompass a type of link, a degree of proximity between the "Entity_1" and the "Entity_2," and/or a degree of certainty regarding the link 367 between the "Entity_1" and the "Entity_2." The augmenting engine 108 may infer such characteristics based on a frequency in which "Entity_1" and "Entity_2" appear together or within a threshold distance in the decrypted data 206, and/or a nature or type of the link between "Entity_1" and "Entity_2." In particular, a shorter link, and/or a link displayed with emphasis (e.g., darker), may indicate a closer proximity and/or a higher degree of certainty. Next, the augmenting engine 108 may similarly indicate such links 369 and 371 between the "Entity_1" and "Entity_3," and between the "Entity_3" and the "Entity_4," respectively.

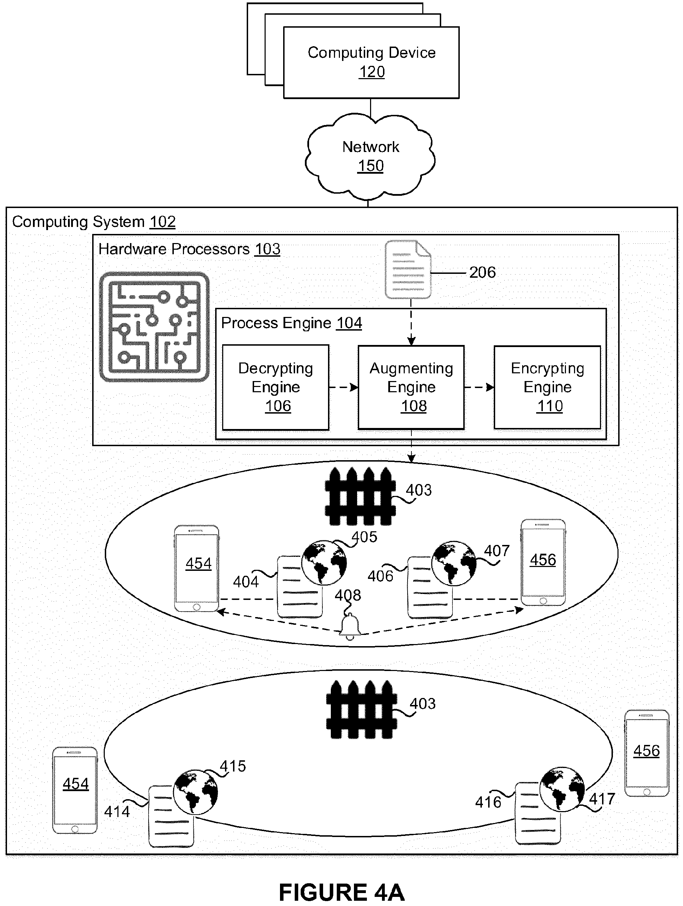

**FIGURES 4A-4B** illustrates a scenario in which alerts or notifications may further augment the decrypted data 206, which may not be feasible on encrypted data. In **FIGURE 4A****,** the decrypted data 206 may encompass streams of data or messages (hereinafter "streams") 404, 406, 414, and 416 transmitted between a sender and a receiver. The sender may operate a device 454 while the receiver may operate the device 456. In some examples, the augmenting engine 108 may determine locations 405 and 407 of entities (e.g., the sender and the receiver) sending the streams 404 and 406, respectively. The augmenting engine 108 may generate an alert or notification (hereinafter "notification") 408, for example, when the sender and the receiver are within a location defined by a geofence 403, and/or within a threshold distance of each other. The augmenting engine 108 may also determine locations 415 and 417 where the streams 414 and 416, respectively, were transmitted. The augmenting engine 108 may determine that one or both of the streams 414 and 416 were transmitted at a location outside of the geofence and thus may refrain from transmitting and/or generating a notification. Alternatively, the augmenting engine 108 may generate and/or output a notification when one or both of the sender and the receiver are outside of the geofence 403, and/or farther than the threshold distance of each other. Although two senders are described, a same principle applies to scenarios in which more than two senders are transmitting data.

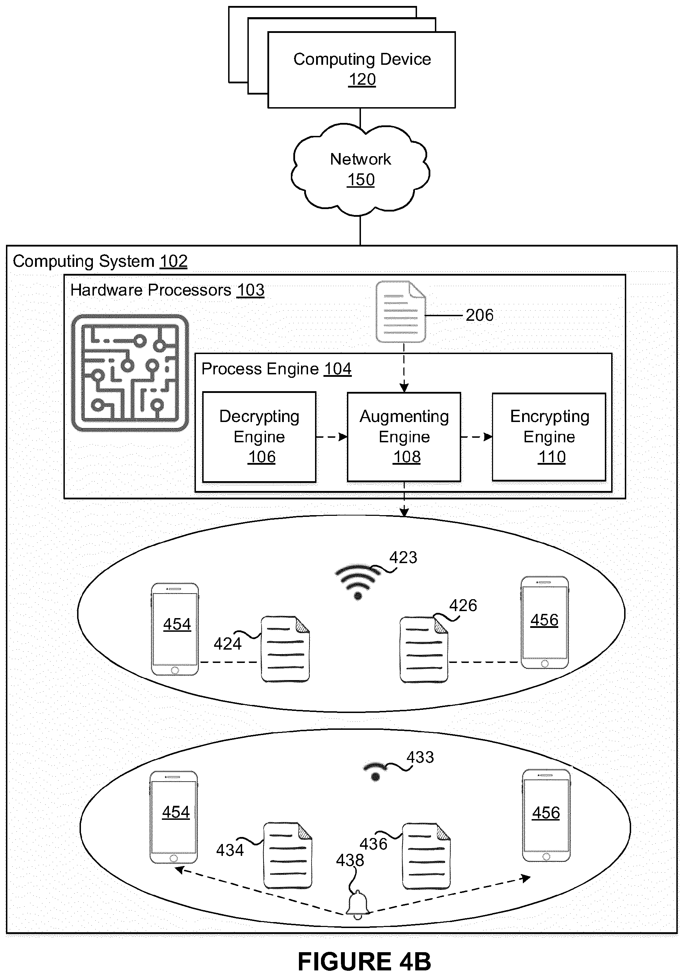

**In** **FIGURE 4B****,** the augmenting engine 108 may determine network or other transmission conditions during transmission of streams, and/or provide a notification to either or both the sender and the receiver of certain changes in the transmission conditions. For example, if a speed of transmission and/or a quality, bandwidth, stability, speed, or congestion of a network, and/or rates of change of the aforementioned, fall outside of certain permitted ranges or intervals (hereinafter "intervals"), the augmenting engine 108 may detect such parameters or properties (hereinafter "parameters"), generate, and/or transmit a notification to either or both the sender or the receiver. In such a manner, the augmenting engine 108 may not only improve efficacy and efficiency of communication between the sender and the receiver but also enhance security conditions. In particular, if transmission conditions are unfavorable, then the sender and the receiver, upon notification, may adapt their communication to send either fewer messages and/or shorter messages. Moreover, such notification also reduces chances of messages in plaintext being stuck in transmit, and potentially intercepted by external entities.

**In** **FIGURE 4B****,** the augmenting engine 108 may detect that a transmission condition 423 during transmission of streams 424 and 426 by the devices 454 and 456, respectively, is within a permitted interval. Thus, the augmenting engine 108 may refrain from generating and/or sending a notification to either of the devices 454 and 456. In alternative examples, the augmenting engine 108 may generate a notification when transmission conditions are within one or more permitted intervals. The augmenting engine 108 may subsequently detect that a transmission condition 433 during transmission of streams 434 and 436 falls outside of a threshold, due to low quality, bandwidth, speed, and/or stability, and/or a high rate of change of any of the aforementioned parameters, and generate a notification 438 to the device 454 and/or the device 456 indicating such.

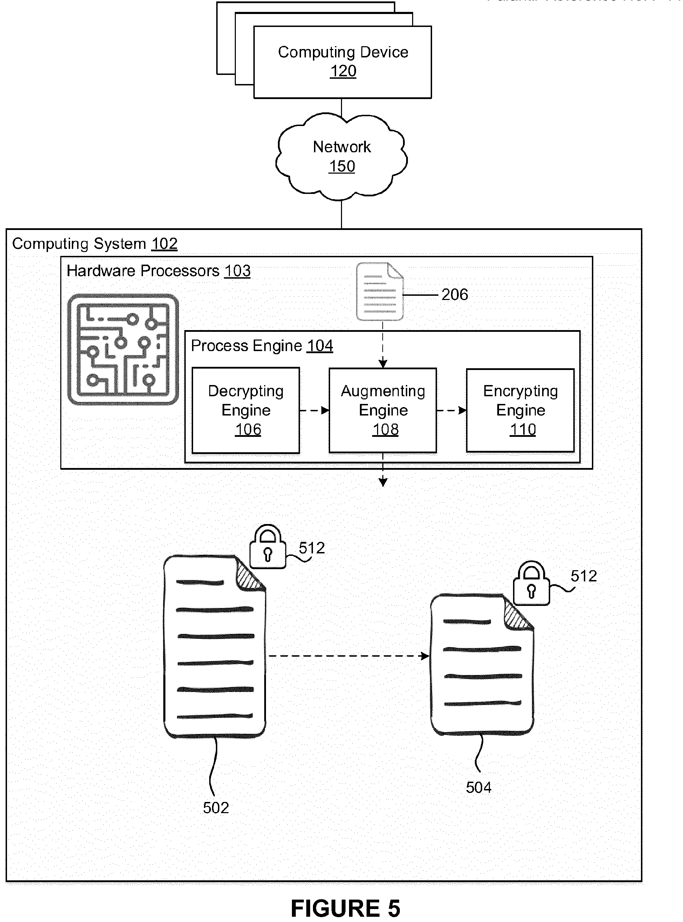

**FIGURE 5** illustrates a scenario of additional operations performed on the decrypted data 206. In particular, the decrypted data 206 may include information 502 that is associated with, or include, metadata such as access control policies or privileges (hereinafter "access control policies") 512. The augmenting engine 108 may apply or enforce the access control policies, for example, based on a receiver or intended recipient of the information 502, by selectively redacting or deleting certain portions of the information 502 that fails to comply with the access control privileges of the receiver. Thus, the augmenting engine 108 may generate modified information 504 which complies with the access control privileges of the receiver. In some examples, if the access control policies are modified during transmit or after receipt by the receiver, the augmenting engine 108 may update the information 502 in accordance with the modified access control policies. This application and enforcement of access control policies may not be possible or feasible on encrypted data.

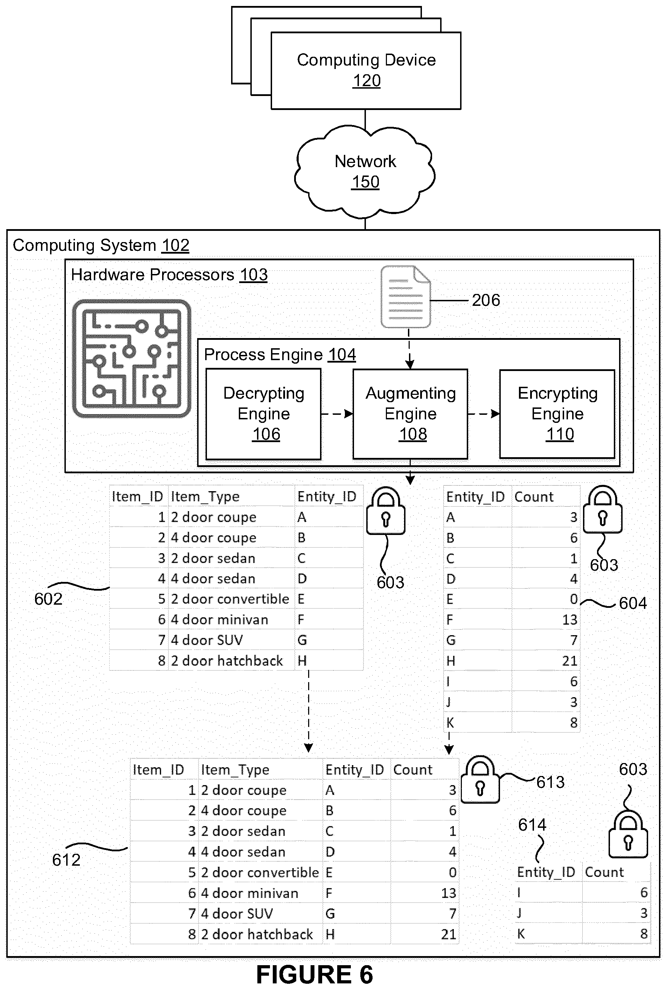

**FIGURE 6** illustrates scenario of additional operations performed on the decrypted data 206, in particular, a join or a merge operation. The decrypted data 206 may include one or more datasets 602 and 604. The augmenting engine 108 may, either automatically or following an indication or confirmation from a user, join or merge certain datasets. The determination of when to join or merge the datasets may be dependent upon detection of common identifiers such as column identifiers, and/or keys such as primary keys and foreign keys.

Although **FIGURE 6** illustrates a left join operation between the datasets 602 and 604, any join or merge operation may be contemplated. For example, other join operations may include, without limitation, a cross join, an inner join, an equi-join, a natural join, a right join, a combination of a left and right join, or a self-join. Here, the augmenting engine 108 may identify a primary key as "Item_ID," of the dataset 602 and a foreign key is "Entity_ID" of the dataset 604. The augmenting engine 108 may determine any potential or actual errors or discrepancies associated with the primary key and the foreign key. For example, one determination may be whether the foreign key of the dataset 604 fails to match or correlate with a column in the dataset 602. Additionally, the augmenting engine 108 may identify whether the primary key and the foreign key fail to uniquely identify each entry. The augmenting engine 108 may determine that in the dataset 604, "Entity_IDs" corresponding to I, J, and K do not correspond to any entries of the dataset 602. The "Entity_IDs" corresponding to I, J, and K may be retained separately as a remaining dataset 614. However, the augmenting engine 108 may nonetheless join the datasets 602 and 604, but exclude "Entity_IDs" corresponding to I, J, and K. Thus, the augmenting engine 108 may generate a joined dataset 612. By such operations, the augmenting engine 108 may enhance the decrypted data 206 by elucidating relationships within the decrypted data 206, which may be impossible or infeasible on encrypted data.

Additionally, the augmenting engine 108 may further implement or enforce any modified access control policies as a result of data operations such as joining or merging. For example, the datasets 602 and 604 may have access control policies 603. However, the join might have caused the access control policies 603 to change to modified access control policies 613. This change may stem from classification by aggregation or classification by compilation. In that situation, two or more datasets, when integrated (e.g., aggregated, compiled, joined, or merged), may have a higher classification level compared to when each of the datasets exist individually. This higher classification level may stem from an additional association being revealed or inferred as a result of the datasets being integrated. For example, this additional association may be between two entities, one of which is described in the dataset 602, and another of which is described in the dataset 604, which was not apparent previously before the join.

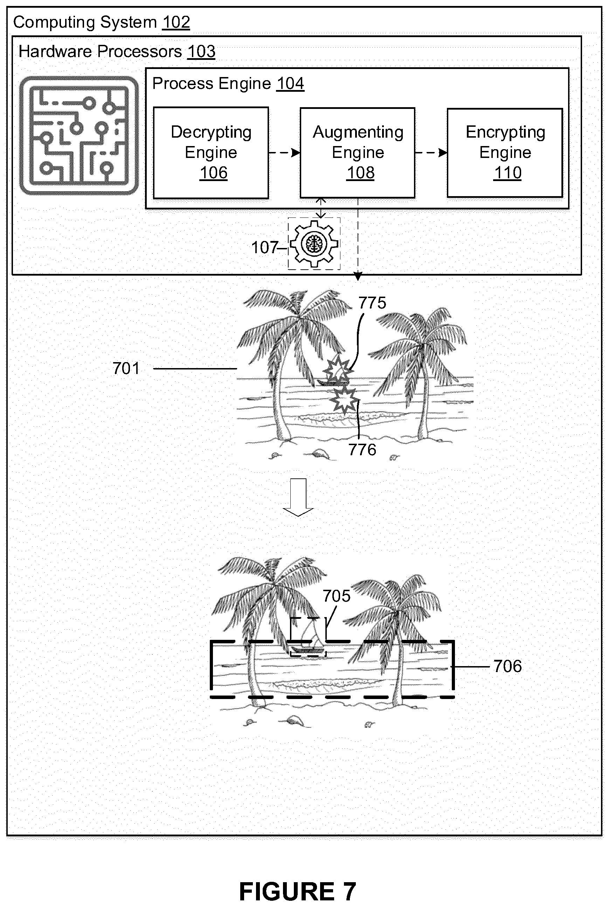

**FIGURE** 7 illustrates exemplary applications of data processing of media data. Exemplary data processing techniques are described in United States Patent Application No. 17/554,406, filed on December 17, 2021, which is hereby incorporated by reference in its entirely. The augmenting engine 108 may receive, from the decrypting engine 106, decrypted media data 701, which may include a subset of an image or a video, such as a frame from a video having a specific timestamp. Here, a subset may be construed as either a portion of or an entire image or a video. The received media data 701 may include tags 775 and 776, which may have been generated at the computing device 120 automatically or by a user. In general, tags may indicate either a relatively higher or lower informational content or measure of information value of a particular byte, feature, region, frame, or any divisible portion of the media data 701. Here, the tags 775 and 776, corresponding to a boat and a water region, may indicate a relatively higher informational content of the boat and the water region. From the tags 775 and 776, and/or metadata of the media data 701, the augmenting engine 108 may infer or determine an informational content or information value of the features, regions, bytes, and/or frames corresponding to the tags 775 and 776, and in turn, infer or determine whether each of the features, regions, bytes, and/or frames within the received media data 701 is to be kept or compressed. Thus, the augmenting engine 108 may extrapolate principles or concepts from the tags 775 and 776to other features, regions, bytes, and/or frames outside of the tags 775 and 776. Here, the tags 775 and 776may indicate that a contextual focus of a user is on ships and maritime traffic, so other features outside of those classifications may be compressed or downsampled. These outside features may be considered as background features or "noise" to be removed or downsampled. Some particular scenarios applicable here, just to name some examples, may include ensuring that one or more ships are safely following a navigation path, or otherwise ensuring safety of one or more ships.

**In** **FIGURE** 7, the augmenting engine 108 may, using the machine learning models 107, estimate or determine bounding regions or demarcations corresponding to the tagged features or regions (e.g., the boat and the water region). The bounding regions may include bounding boxes 705 and 706 around the boat and the water region. The bounding boxes 705 and 706 may indicate demarcations of features and/or regions to be retained, while other features and/or regions may be compressed and/or downsampled. Here, "compress" or "downsample" may be construed as reducing a size and/or storage requirement for a particular byte, feature, region, frame, or any divisible portion of media data, and may encompass removing some features from or removing a particular byte, feature, region, frame, or any divisible portion of media data. Accurate bounding boxes are required to properly apply an intended action or policy to each divisible portion of the media data. Otherwise, if the bounding boxes cover additional unintended portions, data intended to be kept may also be inadvertently compressed.

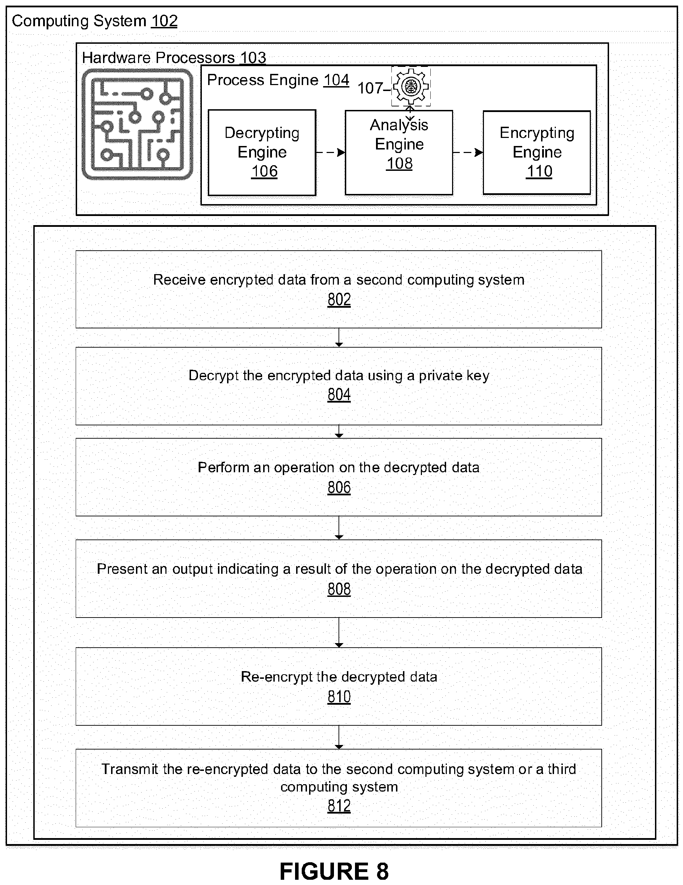

**FIGURE 8** illustrates a flowchart of an example method 800, according to various embodiments of the present disclosure. The method 800 may be implemented in various environments including, for example, the environment 100 of **FIGURE 1****.** The operations of method 800 presented below are intended to be illustrative. Depending on the implementation, the example method 800 may include additional, fewer, or alternative steps performed in various orders or in parallel. The example method 800 may be implemented in various computing systems or devices including one or more processors. In step 802, the computing system 102, in particular, the hardware processors 103, may receive encrypted data from a second computing system. In step 804, the computing system 102, in particular, the hardware processors 103, may at least partially or completely decrypt the encrypted data using a private key. In some examples, only a portion of the encrypted data may be decrypted, and that portion may correspond to the encrypted data on which operations are to be performed. Thus, the computing system 102, in particular, the hardware processors 103, may determine a portion of the encrypted data on which operations are to be performed, so that the decryption may be limited to that portion of the encrypted data, for example, either based a type or a nature of a requested operation, or one or more data types. As a particular scenario, the requested operation may only pertain or apply to text data, but the encrypted data may be associated with both text and media. Thus, the media may not be decrypted, but the text may be decrypted. In yet other scenarios, only a portion of the text corresponding to that on which operations are to be performed may be decrypted. In such a manner, the computing system 102 may conserve computing resources that would otherwise have been consumed to decrypt data, when that data is not operated on.

In step 806, the computing system 102, in particular, the hardware processors 103, may perform operations on the decrypted data. In step 808, the computing system 102, in particular, the hardware processors 103, may present an output indicating a result of the operations on the decrypted data. In step 810, the computing system 102, in particular, the hardware processors 103, may at least partially, or completely, re-encrypt the decrypted data so that the re-encrypted data may safely be further transmitted without compromising security. In step 812, the computing system 102, in particular, the hardware processors 103, may transmit the re-encrypted data either back to the second computing system or to a third computing system. Such an implementation not only preserves security by limiting access of plaintext or non-encrypted data to a trusted computing system, a sender, and a receiver, but also facilitates operations to be performed on the plaintext data which would otherwise be infeasible or impossible.

### HARDWARE IMPLEMENTATION

The techniques described herein are implemented by one or more special-purpose computing devices. The special-purpose computing devices may be hard-wired to perform the techniques, or may include circuitry or digital electronic devices such as one or more application-specific integrated circuits (ASICs) or field programmable gate arrays (FPGAs) that are persistently programmed to perform the techniques, or may include one or more hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, server computer systems, portable computer systems, handheld devices, networking devices or any other device or combination of devices that incorporate hard-wired and/or program logic to implement the techniques.

Computing device(s) are generally controlled and coordinated by operating system software. Operating systems control and schedule computer processes for execution, perform memory management, provide file system, networking, I/O services, and provide a user interface functionality, such as a graphical user interface ("GUI"), among other things.

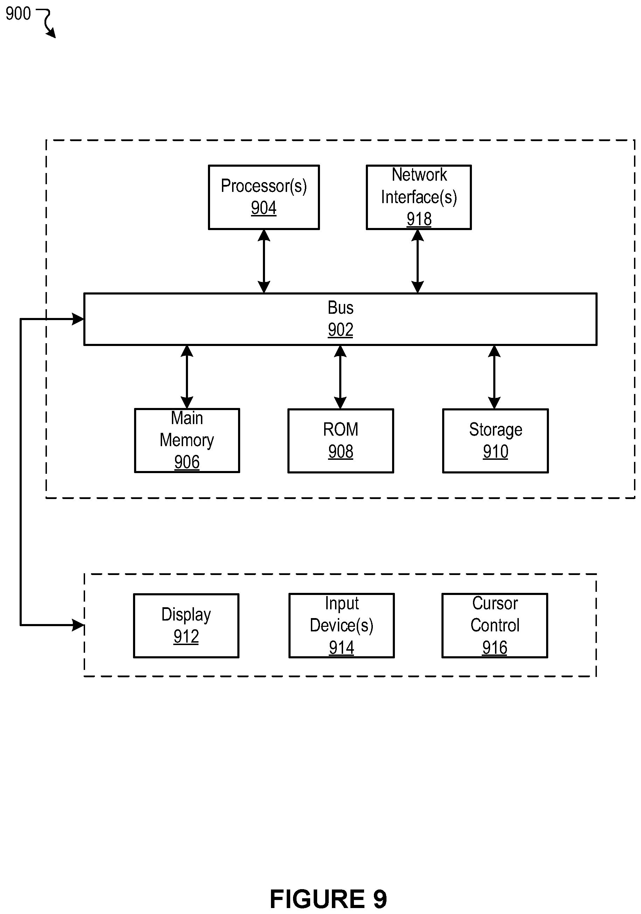

**FIGURE 9** is a block diagram that illustrates a computer system 900 upon which any of the embodiments described herein may be implemented. The computer system 900 includes a bus 902 or other communication mechanism for communicating information, one or more hardware processors 904 coupled with bus 902 for processing information. Hardware processor(s) 904 may be, for example, one or more general purpose microprocessors.

The computer system 900 also includes a main memory 906, such as a random access memory (RAM), cache and/or other dynamic storage devices, coupled to bus 902 for storing information and instructions to be executed by processor 904. Main memory 906 also may be used for storing temporary variables or other intermediate information during execution of instructions to be executed by processor 904. Such instructions, when stored in storage media accessible to processor 904, render computer system 900 into a special-purpose machine that is customized to perform the operations specified in the instructions.

The computer system 900 further includes a read only memory (ROM) 908 or other static storage device coupled to bus 902 for storing static information and instructions for processor 904. A storage device 910, such as a magnetic disk, optical disk, or USB thumb drive (Flash drive), etc., is provided and coupled to bus 902 for storing information and instructions.

The computer system 900 may be coupled via bus 902 to a display 912, such as a cathode ray tube (CRT) or LCD display (or touch screen), for displaying information to a computer user. An input device 914, including alphanumeric and other keys, is coupled to bus 902 for communicating information and command selections to processor 904. Another type of user input device is cursor control 916, such as a mouse, a trackball, or cursor direction keys for communicating direction information and command selections to processor 904 and for controlling cursor movement on display 912. This input device typically has two degrees of freedom in two axes, a first axis (e.g., x) and a second axis (e.g., y), that allows the device to specify positions in a plane. In some embodiments, the same direction information and command selections as cursor control may be implemented via receiving touches on a touch screen without a cursor.

The computing system 900 may include a user interface module to implement a GUI that may be stored in a mass storage device as executable software codes that are executed by the computing device(s). This and other modules may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables.

In general, the word "module," as used herein, refers to logic embodied in hardware or firmware, or to a collection of software instructions, possibly having entry and exit points, written in a programming language, such as, for example, Java, C or C++. A software module may be compiled and linked into an executable program, installed in a dynamic link library, or may be written in an interpreted programming language such as, for example, BASIC, Perl, or Python. It will be appreciated that software modules may be callable from other modules or from themselves, and/or may be invoked in response to detected events or interrupts. Software modules configured for execution on computing devices may be provided on a computer readable medium, such as a compact disc, digital video disc, flash drive, magnetic disc, or any other tangible medium, or as a digital download (and may be originally stored in a compressed or installable format that requires installation, decompression or decryption prior to execution). Such software code may be stored, partially or fully, on a memory device of the executing computing device, for execution by the computing device. Software instructions may be embedded in firmware, such as an EPROM. It will be further appreciated that hardware modules may be comprised of connected logic units, such as gates and flip-flops, and/or may be comprised of programmable units, such as programmable gate arrays or processors. The modules or computing device functionality described herein are preferably implemented as software modules, but may be represented in hardware or firmware. Generally, the modules described herein refer to logical modules that may be combined with other modules or divided into sub-modules despite their physical organization or storage.

The computer system 900 may implement the techniques described herein using customized hard-wired logic, one or more ASICs or FPGAs, firmware and/or program logic which in combination with the computer system causes or programs computer system 900 to be a special-purpose machine. According to one embodiment, the techniques herein are performed by computer system 900 in response to processor(s) 904 executing one or more sequences of one or more instructions contained in main memory 906. Such instructions may be read into main memory 906 from another storage medium, such as storage device 910. Execution of the sequences of instructions contained in main memory 906 causes processor(s) 904 to perform the process steps described herein. In alternative embodiments, hard-wired circuitry may be used in place of or in combination with software instructions.

The term "non-transitory media," and similar terms, as used herein refers to any media that store data and/or instructions that cause a machine to operate in a specific fashion. Such non-transitory media may comprise non-volatile media and/or volatile media. Non-volatile media includes, for example, optical or magnetic disks, such as storage device 910. Volatile media includes dynamic memory, such as main memory 906. Common forms of non-transitory media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge, and networked versions of the same.

Computer readable media include non-transitory media and transmission media. Non-transitory media is distinct from but may be used in conjunction with transmission media. Transmission media participates in transferring information between non-transitory media. For example, transmission media includes coaxial cables, copper wire and fiber optics, including the wires that comprise bus 902. Transmission media can also take the form of acoustic or light waves, such as those generated during radio-wave and infra-red data communications.

Various forms of computer readable media may be involved in carrying one or more sequences of one or more instructions to processor 904 for execution. For example, the instructions may initially be carried on a magnetic disk or solid state drive of a remote computer. The remote computer can load the instructions into its dynamic memory and send the instructions over a telephone line using a modem. A modem local to computer system 900 can receive the data on the telephone line and use an infra-red transmitter to convert the data to an infra-red signal. An infra-red detector can receive the data carried in the infra-red signal and appropriate circuitry can place the data on bus 902. Bus 902 carries the data to main memory 906, from which processor 904 retrieves and executes the instructions. The instructions received by main memory 906 may retrieves and executes the instructions. The instructions received by main memory 906 may optionally be stored on storage device 910 either before or after execution by processor 904.

The computer system 900 also includes a communication interface 918 coupled to bus 902. Communication interface 918 provides a two-way data communication coupling to one or more network links that are connected to one or more local networks. For example, communication interface 918 may be an integrated services digital network (ISDN) card, cable modem, satellite modem, or a modem to provide a data communication connection to a corresponding type of telephone line. As another example, communication interface 918 may be a local area network (LAN) card to provide a data communication connection to a compatible LAN (or WAN component to communicated with a WAN). Wireless links may also be implemented. In any such implementation, communication interface 918 sends and receives electrical, electromagnetic or optical signals that carry digital data streams representing various types of information.

A network link typically provides data communication through one or more networks to other data devices. For example, a network link may provide a connection through local network to a host computer or to data equipment operated by an Internet Service Provider (ISP). The ISP in turn provides data communication services through the world wide packet data communication network now commonly referred to as the "Internet". Local network and Internet both use electrical, electromagnetic or optical signals that carry digital data streams. The signals through the various networks and the signals on network link and through communication interface 918, which carry the digital data to and from computer system 900, are example forms of transmission media.

The computer system 900 can send messages and receive data, including program code, through the network(s), network link and communication interface 918. In the Internet example, a server might transmit a requested code for an application program through the Internet, the ISP, the local network and the communication interface 918.

The received code may be executed by processor 904 as it is received, and/or stored in storage device 910, or other non-volatile storage for later execution.

Each of the processes, methods, and algorithms described in the preceding sections may be embodied in, and fully or partially automated by, code modules executed by one or more computer systems or computer processors comprising computer hardware. The processes and algorithms may be implemented partially or wholly in application-specific circuitry.

### EXAMPLE EMBODIMENTS

Further examples of embodiments of the present invention are defined, without limitation, by the following Example Enumerated Embodiments (EEEs):
EEE1. A computing system that processes encrypted data, comprising:
   one or more processors; and
   memory storing instructions that, when executed by the one or more processors, cause the system to perform:
   receiving encrypted data from a second computing system;
   instantiating the computing system to process the encrypted data, the instantiation comprising:
      decrypting the encrypted data using a private key;
      performing an operation on the decrypted data;
      presenting an output indicating a result of the operation of the decrypted data; and re-encrypting the decrypted data; and
      transmitting the re-encrypted data to the second computing system or a third computing system.
EEE2. The computing system of EEE1, wherein the decrypted data comprises textual data and the operation on the decrypted data comprises:
   tracking a location of a sender and a receiver of the received encrypted data;
   setting a geofence corresponding to the sender and receiver; and
   generating an alert to the sender and the receiver when the sender or the receiver is determined to be within the geofence.
EEE3. The computing system of EEE1 or EEE2, wherein the decrypted data comprises a media, the media including an image, audio, video, or combination thereof; and the operation on the decrypted data comprises downsampling, compressing, or removing a feature of the decrypted data.
EEE4. The computing system of any of EEE1-EEE3, wherein the decrypted data comprises a media, the media including an image, audio, video, or combination thereof; and the operation on the decrypted data comprises augmenting a feature of the decrypted data.
EEE5. The computing system of any of EEE1-EEE4, wherein the decrypted data comprises textual data and the operation on the decrypted data comprises:
   determining when a particular alphanumeric combination or syntax appears in the decrypted data; and
   highlighting the particular alphanumeric combination or syntax.
EEE6. The computing system of any of EEE1-EEE5, wherein the received encrypted data is from a single communication channel.
EEE7. The computing system of any of EEE1-EEE6, wherein the instructions further cause the system to perform:
   receiving an input regarding one or more features of the decrypted data;
   inferring, using a machine learning model, one or more criteria of the operation on the decrypted data based on the input; and
   applying the inferred criteria to the decrypted data.
EEE8. A computer-implemented method of a computing system that that processes encrypted data, wherein the method is performed using one or more processors, the method comprising:
   receiving encrypted data from a second computing system;
   instantiating the computing system to process the encrypted data, the instantiation comprising:
      decrypting the encrypted data using a private key;
      performing an operation on the decrypted data;
      presenting an output indicating a result of the operation on the decrypted data; and re-encrypting the decrypted data; and
      transmitting the re-encrypted data to the second computing system or a third computing system.
EEE9. The computer-implemented method of EEE8, wherein the decrypted data comprises textual data and the operation on the decrypted data comprises:
   tracking a location of a sender and a receiver of the received encrypted data;
   setting a geofence corresponding to the sender and receiver;
   generating an alert to the sender and the receiver when the sender or the receiver is determined to be within the geofence.
EEE10. The computer-implemented method of EEE8 or EEE9, wherein the decrypted data comprises a media, the media including an image, audio, video, or combination thereof; and the operation on the decrypted data comprises downsampling, compressing, or removing a feature of the decrypted data.
EEE11. The computer-implemented method of any of EEE8-EEE10, wherein the decrypted data comprises a media, the media including an image, audio, video, or combination thereof; and the operation on the decrypted data comprises augmenting a feature of the decrypted data.
EEE12. The computer-implemented method of any of EEE8-EEE11, wherein the decrypted data comprises textual data and the operation on the decrypted data comprises:
   determining when a particular alphanumeric combination or syntax appears in the decrypted data; and
   highlighting the particular alphanumeric combination or syntax.
EEE13. The computer-implemented method of any of EEE8-EEE12, wherein the received encrypted data is from a single communication channel.
EEE14. The computer-implemented method of any of EEE8-EEE13, further comprising:
   receiving an input regarding one or more features of the decrypted data;
   inferring, using a machine learning model, one or more criteria of the operation on the decrypted data based on the input; and
   applying the inferred criteria to the decrypted data.
EEE15. A computer readable medium comprising instructions that, when executed, cause one or more processors to perform
   receiving encrypted data from a second computing system;
   instantiating the computing system to process the encrypted data, the instantiation comprising:
      decrypting the encrypted data using a private key;
      performing an operation on the decrypted data;
      presenting an output indicating a result of the operation on the decrypted data; and
      re-encrypting the decrypted data; and
      transmitting the re-encrypted data to the second computing system or a third computing system.
EEE16. The non-transitory computer readable medium of EEE15, wherein the decrypted data comprises textual data and the operation on the decrypted data comprises:
   tracking a location of a sender and a receiver of the received encrypted data;
   setting a geofence corresponding to the sender and receiver;
   generating an alert to the sender and the receiver when the sender or the receiver is determined to be within the geofence.
EEE17. The non-transitory computer readable medium of EEE15 or EEE16, wherein the decrypted data comprises a media, the media including an image, audio, video, or combination thereof; and the operation on the decrypted data comprises downsampling, compressing, or removing a feature of the decrypted data.
EEE18. The non-transitory computer readable medium of any of EEE15-EEE17, wherein the decrypted data comprises a media, the media including an image, audio, video, or combination thereof; and the operation on the decrypted data comprises augmenting a feature of the decrypted data.
EEE19. The non-transitory computer readable medium of any of EEE15-EEE18, wherein the decrypted data comprises textual data and the operation on the decrypted data comprises:
   determining when a particular alphanumeric combination or syntax appears in the decrypted data; and
   highlighting the particular alphanumeric combination or syntax.
EEE20. The non-transitory computer readable medium of any of EEE15-EEE19, wherein the instructions further cause the system to perform:
   receiving an input regarding one or more features of the decrypted data;
   inferring, using a machine learning model, one or more criteria of the operation on the decrypted data based on the input; and
   applying the inferred criteria to the decrypted data.

The various features and processes described above may be used independently of one another, or may be combined in various ways. All possible combinations and sub-combinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from, or rearranged compared to the disclosed example embodiments.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be removed, executed out of order from that shown or discussed, including substantially concurrently or in reverse order, depending on the functionality involved, as would be understood by those skilled in the art.

It should be emphasized that many variations and modifications may be made to the above-described embodiments, the elements of which are to be understood as being among other acceptable examples. All such modifications and variations are intended to be included herein within the scope of this disclosure. The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The scope of the invention should therefore be construed in accordance with the appended claims and any equivalents thereof.

### Language

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Although an overview of the subject matter has been described with reference to specific example embodiments, various modifications and changes may be made to these embodiments without departing from the broader scope of embodiments of the present disclosure. Such embodiments of the subject matter may be referred to herein, individually or collectively, by the term "invention" merely for convenience and without intending to voluntarily limit the scope of this application to any single disclosure or concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

It will be appreciated that an "engine," "system," "data store," and/or "database" may comprise software, hardware, firmware, and/or circuitry. In one example, one or more software programs comprising instructions capable of being executable by a processor may perform one or more of the functions of the engines, data stores, databases, or systems described herein. In another example, circuitry may perform the same or similar functions. Alternative embodiments may comprise more, less, or functionally equivalent engines, systems, data stores, or databases, and still be within the scope of present embodiments. For example, the functionality of the various systems, engines, data stores, and/or databases may be combined or divided differently.

"Open source" software is defined herein to be source code that allows distribution as source code as well as compiled form, with a well-publicized and indexed means of obtaining the source, optionally with a license that allows modifications and derived works.

The data stores described herein may be any suitable structure (e.g., an active database, a relational database, a self-referential database, a table, a matrix, an array, a flat file, a documented-oriented storage system, a non-relational No-SQL system, and the like), and may be cloud-based or otherwise.

As used herein, the term "or" may be construed in either an inclusive or exclusive sense. Moreover, plural instances may be provided for resources, operations, or structures described herein as a single instance. Additionally, boundaries between various resources, operations, engines, engines, and data stores are somewhat arbitrary, and particular operations are illustrated in a context of specific illustrative configurations. Other allocations of functionality are envisioned and may fall within a scope of various embodiments of the present disclosure. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of embodiments of the present disclosure as represented by the appended claims. The specification and drawings are, accordingly, to be regarded in an illustrative rather than a restrictive sense.

Although the invention has been described in detail for the purpose of illustration based on what is currently considered to be the most practical and preferred implementations, it is to be understood that such detail is solely for that purpose and that the invention is not limited to the disclosed implementations, but, on the contrary, is intended to cover modifications and equivalent arrangements that are within the scope of the appended claims. For example, it is to be understood that the present invention contemplates that, to the extent possible, one or more features of any embodiment can be combined with one or more features of any other embodiment. A component being implemented as another component may be construed as the component being operated in a same or similar manner as the another component, and/or comprising same or similar features, characteristics, and parameters as the another component.

The phrases "at least one of," "at least one selected from the group of," or "at least one selected from the group consisting of," and the like are to be interpreted in the disjunctive (e.g., not to be interpreted as at least one of A and at least one of B).

Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment, but may be in some instances. Furthermore, the particular features, structures, or characteristics may be combined in any suitable manner in one or more embodiments.
The following clauses form part of the invention.
Clause 1. A computer-implemented method of a computing system that processes data encrypted for transit from a second computing system to a third computing system, wherein the method is performed using one or more processors, the method comprising:
   receiving encrypted data from the second computing system;
   instantiating the computing system to process the encrypted data, the instantiation comprising:
      decrypting the encrypted data using a private key;
      performing an operation on the decrypted data, wherein the operation comprises at least one of data analysis, data extraction, data transformation, and a logic operation performed on the decrypted data;
      presenting an output indicating a result of the operation on the decrypted data; and
      re-encrypting the decrypted data; and
   transmitting the re-encrypted data to at least one of the second computing system and the third computing system.
Clause 2. The computer-implemented method of clause 1, wherein the decrypted data comprises textual data and the operation on the decrypted data comprises:
   tracking a location of a sender and a receiver of the received encrypted data;
   setting a geofence corresponding to the sender and receiver;
   generating an alert to the sender and the receiver when the sender or the receiver is determined to be within the geofence.
Clause 3. The computer-implemented method of clause 1 or clause 2, wherein the decrypted data comprises a media, the media including an image, audio, video, or combination thereof; and the operation on the decrypted data comprises downsampling, compressing, or removing a feature of the decrypted data.
Clause 4. The computer-implemented method of any of clauses 1-3, wherein the decrypted data comprises a media, the media including an image, audio, video, or combination thereof; and the operation on the decrypted data comprises augmenting a feature of the decrypted data by outputting contextual information associated with the decrypted data.
Clause 5. The computer-implemented method of any of clauses 1-4, wherein the decrypted data comprises textual data and the operation on the decrypted data comprises:
   determining when a particular alphanumeric combination or syntax appears in the decrypted data; and
   highlighting the particular alphanumeric combination or syntax.
Clause 6. The computer-implemented method of any of clauses 1-5, wherein the received encrypted data is from a single communication channel.
Clause 7. The computer-implemented method of any of clauses 1-6, further comprising:
   receiving an input regarding one or more features of the decrypted data;
   inferring, using a machine learning model, one or more criteria of the operation on the decrypted data based on the input; and
   applying the inferred criteria to the decrypted data.
Clause 8. The computer-implemented method of any of clauses 1-7, wherein the logic operation comprises at least one of an alert, tag, notification, extraction of entities, transformation and server-side machine learning or artificial intelligence.
Clause 9. The computer-implemented method of any of clauses 1-8, wherein the decrypted data comprises a plurality of datasets and the operation on the decrypted data comprises a join or a merge operation upon detection of common identifiers between at least two datasets for elucidating relationships within the decrypted data.
Clause 10. A computing system that processes encrypted data, comprising:
   one or more processors; and
   memory storing instructions that, when executed by the one or more processors, cause the system to perform the method of any of clauses 1-9.
Clause 11. A computer readable medium comprising instructions that, when executed, cause one or more processors to perform the method of any of clauses 1-9.

## Claims

1. A computer-implemented method of a computing system (102) that processes data encrypted for transit from a second computing system to a third computing system, wherein the method is performed using one or more processors (103), the method comprising:
receiving (802) encrypted data (202) from the second computing system;
decrypting (804) the encrypted data (202) using a private key (204);
performing (806) an operation on the decrypted data (206), wherein the operation comprises:
performing at least one of data analysis, data extraction, data transformation, and a logic operation performed on the decrypted data (206);
determining a transmission condition during transmission of data between a sender and a receiver; and
generating an alert when the transmission condition falls outside of a permitted interval;
generating (808) an output indicating a result of the operation on the decrypted data (206);
re-encrypting (810) the decrypted data (206); and
transmitting (812) the re-encrypted data (210) to at least one of the second computing system and the third computing system.

2. The computer-implemented method of claim 1, wherein the transmission condition comprises at least one of transmission speed, bandwidth, latency, stability or network congestion.

3. The computer-implemented method of claim 1 or claim 2, wherein the permitted interval comprises a predefined range for the transmission condition.

4. The computer-implemented method of any preceding claim, wherein the generating the alert comprises transmitting a notification to at least one of the sender and the receiver.

5. The computer-implemented method of any preceding claim, wherein the transmission condition is monitored during transmission of data streams between the sender and the receiver.

6. The computer-implemented method of any preceding claim, wherein the alert is generated in response to a rate of change of the transmission condition exceeding a threshold.

7. The computer-implemented method of any preceding claim, wherein the alert is generated to prompt at least one of the sender and the receiver to reduce a number of transmitted messages or a size of transmitted messages.

8. The computer-implemented method of any preceding claim, wherein the encrypted data is transmitted via a communication network and the transmission condition relates to a performance parameter of the communication network.

9. The computer-implemented method of any preceding claim, wherein the decrypted data is deleted after re-encryption.

10. A computing system (102) that processes encrypted data (202), comprising:
one or more processors (103); and
memory storing instructions that, when executed by the one or more processors (103), cause the computing system (102) to perform the method of any of claims 1-9.

11. A computer readable medium (112) comprising instructions that, when executed, cause one or more processors (103) to perform the method of any of claims 1-9.
